# EUROPEAN PATENT APPLICATION

(11) **EP 4 513 720 A1**
(43) Date of publication of application: **26.02.2025**
(21) Application number: 23791523.6
(22) Date of filing: 24.02.2023
(51) Int. Cl.: H02K 1/22, H02K 16/02, H02K 51/00

(54) **POLE PIECE UNIT AND MAGNETICALLY GEARED ELECTRICAL MACHINE**

(30) Priority: 22.04.2022 JP 2022070735
(71) Applicant: Mitsubishi Heavy Industries, Ltd., Tokyo 100-8332 (JP)
(72) Inventor: SUGIYAMA, Takushi, Tokyo 100-8332 (JP); SHIMIZU, Takayuki, Tokyo 100-8332 (JP); OKABE, Ryoji, Tokyo 100-8332 (JP)
(74) Representative: Studio Torta S.p.A.
(86) International application number: PCT/JP2023/006628
(87) International publication number: WO 2023/203868

(57) **Abstract**

A pole piece unit includes an annular unit, an inner cover disposed an inner circumferential surface of the annular unit, an inner plate disposed on an inner circumferential surface of the inner cover and disposed overlapping at least a coupling portion in an axial direction, an outer cover disposed on an outer circumferential surface of the annular unit, an outer plate disposed on an outer circumferential surface of the outer cover and disposed at least partially overlapping the inner plate in the axial direction, and a fastening member including a shaft portion disposed penetrating the outer plate, the outer cover, the coupling portion of the annular unit, the inner cover, and the inner plate in a radial direction of the annular unit.

## Description

The present disclosure relates to a pole piece unit and a magnetically geared electrical machine.

Priority is claimed on Japanese Patent Application No. 2022-070735, filed Apr. 22, 2022, the content of which is incorporated herein by reference.

### Background Art

A magnetically geared electrical machine disclosed in Patent Document 1 includes a plurality of first magnets aligned in a circumferential direction and second magnets aligned in the circumferential direction on an outer circumferential side of the plurality of first magnets.

A pole piece unit, which is a component of the magnetically geared electrical machine, is provided between the plurality of first magnets and the plurality of second magnets.

### Citation List

### Patent Literature

Patent Document 1 US 9425655

### Summary of Invention

### Technical Problem

During operation of the magnetically geared electrical machine, electromagnetic forces oriented in a radial direction act on the pole piece unit.

At this time, a design for improving the strength is desired so that a pole piece of the pole piece unit does not become detached.

It is an object of the present disclosure to provide a pole piece unit having improved strength, and a magnetically geared electrical machine.

### Solution to Problem

A pole piece unit according to an embodiment of the present disclosure includes:
an annular unit extending in a circumferential direction with respect to an axis and including
a plurality of pole pieces aligned at intervals in the circumferential direction,
a plurality of non-magnetic bodies aligned at intervals in the circumferential direction and aligned alternately with the plurality of pole pieces, and
a coupling portion connected to an end portion of each of the pole pieces and an end portion of each of the non-magnetic bodies on one side of the axis in the axial direction;
an inner cover disposed on an inner circumferential surface of the annular unit;
an inner plate disposed on an inner circumferential surface of the inner cover and disposed overlapping at least the coupling portion in the axial direction;
an outer cover disposed on an outer circumferential surface of the annular unit;
an outer plate disposed on an outer circumferential surface of the outer cover and disposed at least partially overlapping the inner plate in the axial direction; and
a fastening member including a shaft portion and disposed penetrating the outer plate, the outer cover, the coupling portion, the inner cover, and the inner plate in a radial direction of the annular unit.

A pole piece unit according to an embodiment of the present disclosure includes:
an annular unit extending in a circumferential direction with respect to an axis and including
a plurality of pole pieces aligned at intervals in the circumferential direction,
a plurality of non-magnetic bodies aligned at intervals in the circumferential direction and aligned alternately with the plurality of pole pieces, and
a coupling portion connected to an end portion of each of the pole pieces and an end portion of each of the non-magnetic bodies on one side of the axis in the axial direction;
an inner plate disposed on an inner circumferential surface of the annular unit, the inner plate being formed extending from an inner circumferential surface of the coupling portion to an inner circumferential surface of each of the pole pieces and inner circumferential surfaces of the non-magnetic bodies;
an outer plate disposed on an outer circumferential surface of the annular unit and formed extending from an outer circumferential surface of the coupling portion to an outer circumferential surface of each of the pole pieces and outer circumferential surfaces of the non-magnetic bodies; and
a fastening member including a shaft portion and disposed penetrating the outer plate, the coupling portion, and the inner plate in a radial direction of the annular unit.

A magnetically geared electrical machine according to an embodiment of the present disclosure includes:
the pole piece unit;
a first yoke unit including a plurality of first magnets aligned in the circumferential direction on an outer side or an inner side of the annular unit and a first yoke supporting the plurality of first magnets; and
a second yoke unit including a plurality of second magnets aligned in the circumferential direction on the inner side or the outer side of the annular unit and a second yoke supporting the plurality of second magnets.

### Advantageous Effects of Invention

The present disclosure can provide a pole piece unit having improved strength and a magnetically geared electrical machine.

### Brief Description of Drawings

FIG. 1A is a schematic diagram of a magnetically geared electrical machine (magnetically geared generator) according to an embodiment.
FIG. 1B is a schematic diagram of a magnetically geared electrical machine (magnetically geared generator) according to another embodiment.
FIG. 1C is a schematic diagram of a magnetically geared electrical machine (magnetically geared motor) according to an embodiment.
FIG. 1D is a schematic diagram of a magnetically geared electrical machine (magnetically geared motor) according to another embodiment.
FIG. 2A is a schematic diagram illustrating a first internal structure of the magnetically geared electrical machine according to an embodiment.
FIG. 2B is a schematic diagram illustrating a second internal structure of the magnetically geared electrical machine according to an embodiment.
FIG. 3 is a schematic diagram of a pole piece unit according to an embodiment.
FIG. 4A is a conceptual exploded view of a pole piece unit according to a first embodiment (a first example).
FIG. 4B is a conceptual exploded view of a pole piece unit according to the first embodiment (a second example).
FIG. 4C is a schematic diagram of the first internal structure to which the pole piece unit according to the second example is applied.
FIG. 5A is a conceptual exploded view of the pole piece unit according to the first embodiment.
FIG. 5B is a schematic view illustrating an annular portion of the pole piece unit according to a second embodiment.
FIG. 5C is a schematic view of the first internal structure to which the pole piece unit according to the second embodiment is applied.

### Description of Embodiments

Hereinafter, some embodiments of the present disclosure will be described with reference to the accompanying drawings.

Note that, dimensions, materials, shapes, relative positions and the like of components described in the embodiments or illustrated in the drawings are merely illustrative examples and are not intended to limit the scope of the present disclosure.

### 1. Overview of Magnetically Geared Electrical Machine 1

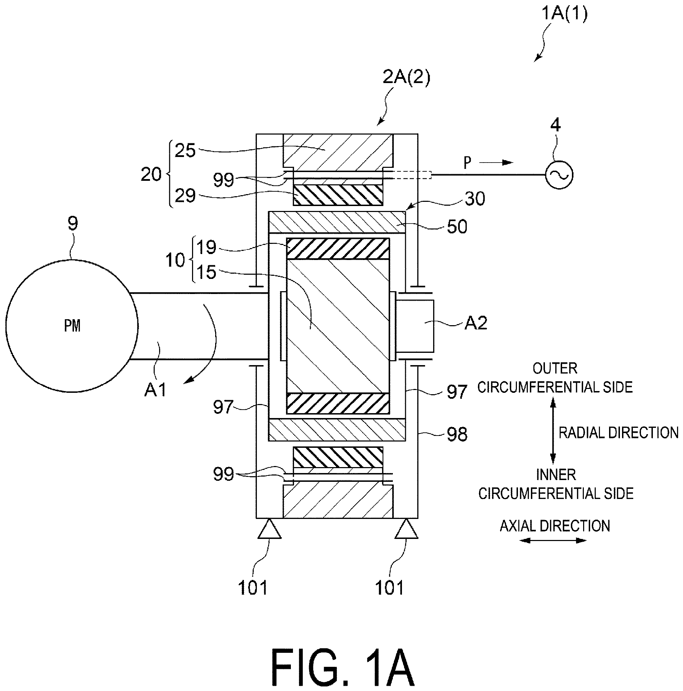

FIGS. 1A to 1D are schematic diagrams of a magnetically geared electrical machine 1 according to some embodiments of the present disclosure.

In the following description, an "axial direction" is a direction parallel to an axis of rotation (a first axis of rotation A1 or a second axis of rotation A2) of the magnetically geared electrical machine 1, a "radial direction" is a direction orthogonal to the axis of rotation of the magnetically geared electrical machine 1, and a "circumferential direction" is a circumferential direction with reference to the axis of rotation of the magnetically geared electrical machine 1.

Each of the magnetically geared electrical machines 1 illustrated in FIGS. 1A to 1D includes a first yoke unit 10, a second yoke unit 20, and a pole piece unit 30, in order from one side in the radial direction.

These three units all extend in the axial direction.

The first yoke unit 10 includes a plurality of first magnets 19 aligned in the circumferential direction and a first yoke 15 supporting the plurality of first magnets 19.

The second yoke unit 20 includes a plurality of second magnets 29 aligned in the circumferential direction and a second yoke 25 supporting the plurality of second magnets 29.

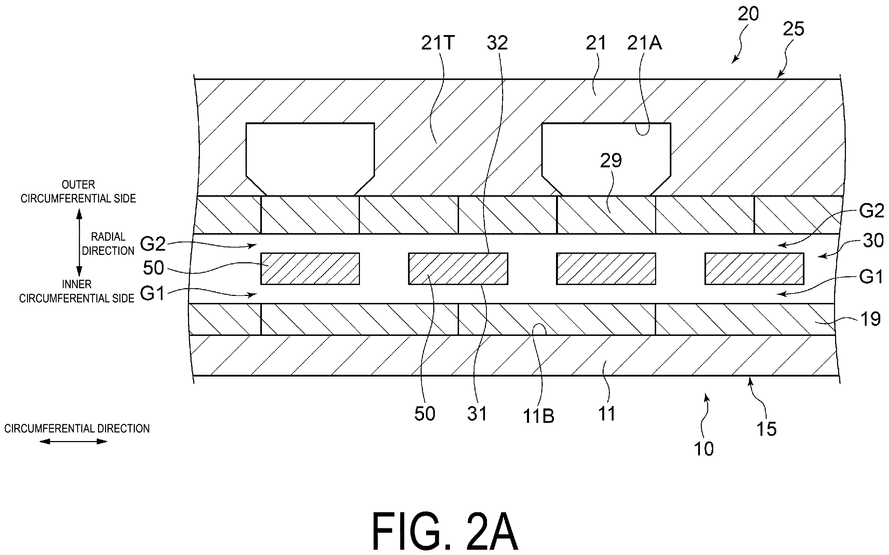

Then, the pole piece unit 30 includes a plurality of pole pieces 50 aligned at intervals in the circumferential direction. Between the first yoke unit 10 and the second yoke unit 20, the plurality of pole pieces 50 face the plurality of first magnets 19 and the plurality of second magnets 29 with gaps G1 and G2 (see FIG. 2A, for example) therebetween, respectively.

Each of the pole pieces 50 has a structure in which a plurality of electromagnetic steel sheets are stacked in the axial direction.

One of the first yoke unit 10, the second yoke unit 20, or the pole piece unit 30 functions as a stator, and the remaining two function as rotors.

In the example in FIGS. 1A to 1D, the second yoke unit 20 is disposed on the outer circumferential side of the first yoke unit 10. That is, the magnetically geared electrical machine 1 includes the first yoke unit 10, the pole piece unit 30, and the second yoke unit 20 in that order from the inner side (the inner circumferential side) in the radial direction.

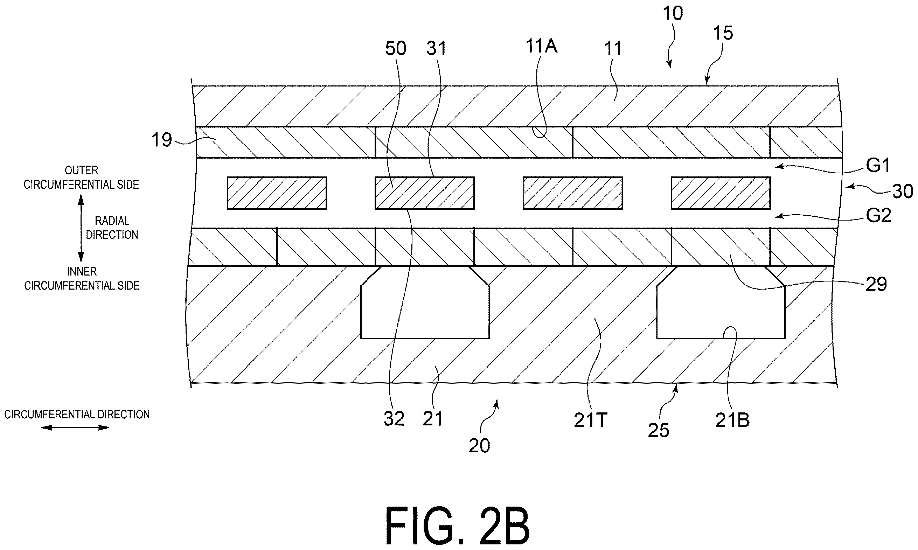

In another example, the second yoke unit 20 may be disposed on the inner circumferential side of the first yoke unit 10, that is, the magnetically geared electrical machine 1 may include the first yoke unit 10, the pole piece unit 30, and the second yoke unit 20 in that order from the outer side (the outer circumferential side) in the radial direction (see FIG. 2B).

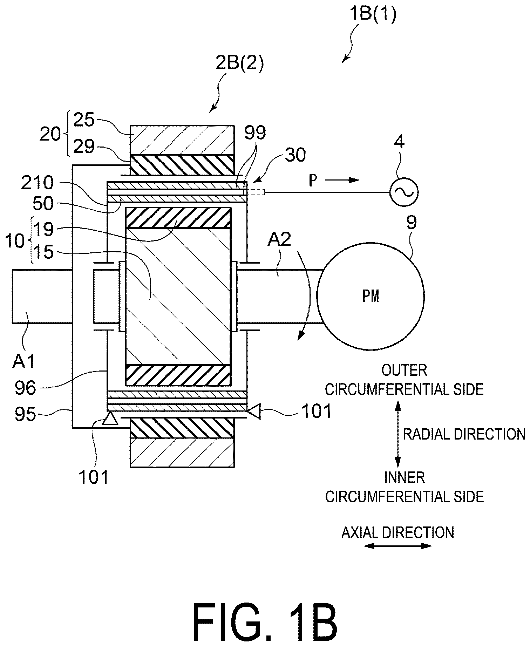

Magnetically geared electrical machines 1A and 1B (1) illustrated in FIG. 1A and FIG. 1B are magnetically geared generators 2A and 2B (2) configured to be driven to generate electric power by an input from an engine 9.

The magnetically geared generator 2 is configured to supply a power P generated by the power generation to a power supply destination 4 that may be a power grid, for example.

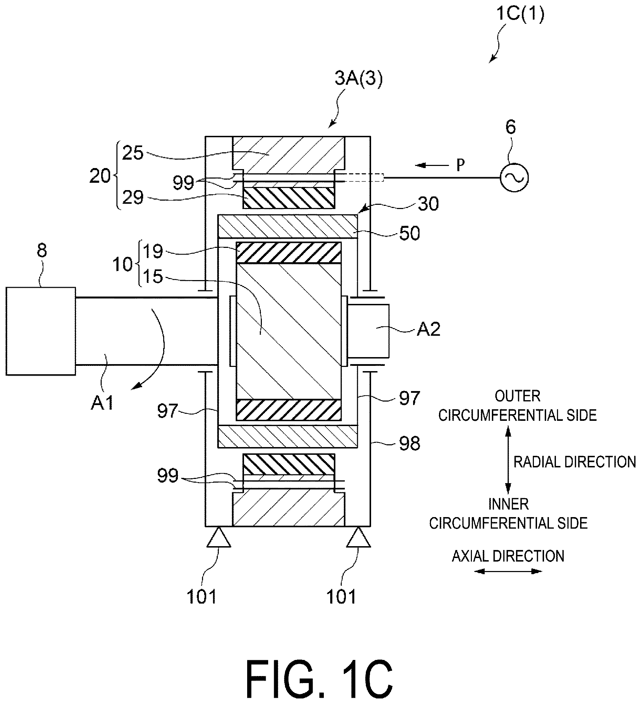

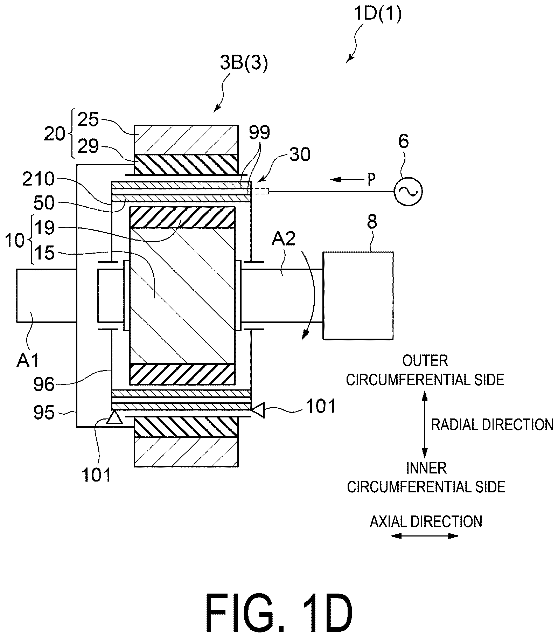

Magnetically geared electrical machines 1C and 1D (1) illustrated in FIG. 1C and FIG. 1D are magnetically geared motors 3A and 3B (3) configured to receive a supply of the power P from a power supply source 6 that may be a power grid, for example, in order to drive a rotary machine 8.

### 1-1. Magnetically Geared Generator 2

The magnetically geared generator 2A (2) illustrated in FIG. 1A includes a housing 98 that may be mounted to a base 101.

In the example in the same drawing, the second yoke unit 20 supported by the housing 98 is provided with coils 99 as stator windings that can be electrically connected to the power supply destination 4.

That is, in the example in the same drawing, the second yoke unit 20 functions as the stator.

Via a bearing, the housing 98 rotatably supports a first rotor shaft A1 that is an input shaft coupled to the engine 9.

Both of the ends of the pole piece unit 30 in the axial direction are respectively coupled to a pair of end plates 97.

Then, one of the end plates 97 is coupled to the first rotor shaft A1, and the other end plate 97 is coupled, via a bearing, to a second rotor shaft A2 disposed coaxially with the first rotor shaft A1.

Thus, the pole piece unit 30 illustrated in the same drawing functions as the rotor that rotates together with the first rotor shaft A1.

The second rotor shaft A2 according to the present example supports the first yoke unit 10 disposed between the pair of end plates 97.

Thus, the first yoke unit 10 illustrated in the same drawing functions as the rotor that rotates together with the second rotor shaft A2.

The second rotor shaft A2 is rotatably supported by the housing 98, via a bearing.

The magnetically geared generator 2A converts the mechanical input from the engine 9 to the power P by utilizing the principles of a magnetic harmonic gear and electromagnetic induction.

As a more specific example, when the first rotor shaft A1 rotates together with the pole piece unit 30 in accordance with the driving of the engine 9, the plurality of pole pieces 50 move relative to the plurality of first magnets 19 and the plurality of second magnets 29 in the circumferential direction.

This modulates a magnetic flux between the first yoke unit 10 and the second yoke unit 20 and rotates the first yoke unit 10 as a result of the first magnet 19 receiving a magnetic force from the modulated magnetic field.

A current is generated in the coils 99 by the electromagnetic induction caused by the rotation of the pole piece unit 30 and the first yoke unit 10, and the magnetically geared generator 2A can thus generate the power.

A ratio of a rotational speed of the first yoke unit 10 to that of the pole piece unit 30 is represented by a ratio of a number of magnetic poles NL of the pole piece 50 to a number of pole pairs NH of the first magnet 19 (= NL/NH).

In the present example, NL/NH is greater than 1, the first yoke unit 10 functions as the high-speed rotor, and the pole piece unit 30 functions as the low-speed rotor.

The number of magnetic poles NL of the pole piece 50 is smaller than a number of magnetic poles NS of the second magnet 29.

In the magnetically geared generator 2A illustrated in FIG. 1A, the second rotor shaft A2 may function as the input shaft instead of the first rotor shaft A1.

Although a detailed illustration is omitted, in this case, the engine 9 is coupled to the second rotor shaft A2.

When the first yoke unit 10 rotates together with the second rotor shaft A2 in accordance with the driving of the engine 9, the plurality of first magnets 19 move relative to the plurality of pole pieces 50 and the plurality of second magnets 29, and the pole pieces 50 modulate the magnetic flux between the first yoke unit 10 and the second yoke unit 20.

Thus, the magnetic force resulting from the modulation of the magnetic field causes the pole pieces 50 to rotate together with the first rotor shaft A1 as a result of the magnetic force caused by the modulation of the magnetic field.

As a result, the current is generated in the coils 99 by the electromagnetic induction caused by the rotation of the first yoke unit 10 and the pole piece unit 30, and the magnetically geared generator 2A can thus generate the power.

In this case also, since the configuration is adopted in which NL/NH is greater than 1, the first yoke unit 10 functions as the high-speed rotor, and the pole piece unit 30 functions as the low-speed rotor.

Furthermore, the first rotor shaft A1 and the second rotor shaft A2 illustrated in FIG. 1A may be a single rotor shaft.

Although a detailed illustration is omitted, in this case, the one rotor shaft coupled to the engine 9 is rotatably supported by the housing 98 and is rotatably coupled to the first yoke unit 10.

Then, the pair of end plates 97 are respectively fixed to an outer peripheral portion of the rotor shaft.

In this configuration also, the first yoke unit 10 rotates in response to the pole piece unit 30 rotating in accordance with the driving of the engine 9, and the current is generated in the coils 99.

In the magnetically geared generator 2B (2) illustrated in FIG. 1B, the pole piece unit 30 functions as the stator, and the first yoke unit 10 and the second yoke unit 20 function as the rotors.

The magnetically geared generator 2B includes a housing 96 that may be mounted to the base 101, and the pole piece unit 30 is supported by the housing 96.

The plurality of pole pieces 50 disposed at intervals in the circumferential direction are provided with the coils 99 as the stator windings that can be electrically connected to the power supply destination 4.

The housing 96 rotatably supports the second rotor shaft A2, via a bearing.

The second rotor shaft A2, which functions as the input shaft in the example in the same drawing, supports the first yoke unit 10 and is coupled to the engine 9.

The first rotor shaft A1 disposed coaxially with the second rotor shaft A2 is rotatably supported by a support unit (not illustrated), and is coupled to the second yoke unit 20 via a coupling member 95.

The second yoke unit 20 may be coupled to the pole piece unit 30 via a bearing.

The power generation principle of the magnetically geared power generator 2B is the same as that of the magnetically geared power generator 2A.

When the second rotor shaft A2 rotates together with the first yoke unit 10 in accordance with the driving of the engine 9, the plurality of first magnets 19 move relative to the plurality of pole pieces 50 and the plurality of second magnets 29, and the pole pieces 50 modulate the magnetic flux between the first yoke unit 10 and the second yoke unit 20.

Thus, the second yoke unit 20 rotates together with the first rotor shaft A1 as a result of the magnetic force caused by the modulation of the magnetic field.

The current is generated in the coils 99 by the electromagnetic induction caused by the rotation of the first yoke unit 10 and the second yoke unit 20, and the magnetically geared generator 2B can thus generate the power.

In the magnetically geared generator 2B illustrated in FIG. 1B, the first rotor shaft A1 may function as the input shaft instead of the second rotor shaft A2.

Although a detailed illustration is omitted, in this case, the engine 9 is coupled to the first rotor shaft A1.

When the second yoke unit 20 rotates together with the first rotor shaft A1 in accordance with the driving of the engine 9, the plurality of second magnets 29 move relative to the plurality of pole pieces 50 and the plurality of first magnets 19, and the pole pieces 50 modulate the magnetic flux between the first yoke unit 10 and the second yoke unit 20.

The first yoke unit 10 rotates together with the second rotor shaft A2 as a result of the magnetic force caused by the modulation of the magnetic field.

The current is generated in the coils 99 by the electromagnetic induction caused by the rotation of the first yoke unit 10 and the second yoke unit 20, and the magnetically geared generator 2B can thus generate the power.

### 1-2. Magnetically Geared Motor 3

The magnetically geared motor 3A (3) illustrated in FIG. 1C has a configuration similar to that of the magnetically geared generator 2A (see FIG. 1A).

More specifically, the magnetically geared motor 3A differs from the magnetically geared generator 2A in that the coils 99 that are the stator windings can be electrically connected to the power supply source 6, and in that the first rotor shaft A1 is coupled to the rotary machine 8.

In all other points, the magnetically geared motor 3A has the same configuration as that of the magnetically geared generator 2A.

That is, the magnetically geared motor 3A includes the housing 98, the first rotor shaft A1, the second rotor shaft A2, the pair of end plates 97, and the like.

In the example in FIG. 1C, the second yoke unit 20 functions as the stator, and the first yoke unit 10 and the pole piece unit 30 function as the rotors.

The rotary machine 8 may be, for example, an electric vehicle that travels as a result of being driven by the magnetically geared motor 3A (3).

In this case, the first rotor shaft A1 may be coupled to a drive shaft of the electric vehicle, which is a component of the rotary machine 8.

The magnetically geared motor 3A rotates the first yoke unit 10 together with the second rotor shaft A2 using a rotating magnetic field generated by energization of the coils 99.

The plurality of first magnets 19 move in the circumferential direction relative to the plurality of pole pieces 50 and the plurality of second magnets 29, and thus, the pole pieces 50 modulate the magnetic flux between the first yoke unit 10 and the second yoke unit 20.

The magnetic force generated by the modulated magnetic field then causes the pole pieces 50 to rotate together with the first rotor shaft A1, and the magnetically geared motor 3A can thus impart power to the rotary machine 8 via the first rotor shaft A1.

In the example illustrated in FIG. 1C, since the configuration is adopted in which NL/NH is greater than 1, the first yoke unit 10 functions as the high-speed rotor, and the pole piece unit 30 functions as the low-speed rotor.

The magnetically geared motor 3B (3) illustrated in FIG. 1D has a configuration similar to that of the magnetically geared generator 2B (see FIG. 1B).

More specifically, the magnetically geared motor 3B differs from the magnetically geared generator 2B in that the coils 99 that are the stator windings can be electrically connected to the power supply source 6, and in that the first rotor shaft A1 is coupled to the rotary machine 8.

In all other points, the magnetically geared motor 3B has the same configuration as that of the magnetically geared generator 2B.

That is, the magnetically geared motor 3B includes the housing 96, the first rotor shaft A1, the second rotor shaft A2, the coupling member 95, and the like.

In the example in FIG. 1D, the pole piece unit 30 functions as the stator, and the first yoke unit 10 and the second yoke unit 20 function as the rotors.

The operating principle of the magnetically geared motor 3B is the same as that of the magnetically geared motor 3A.

That is, the second yoke unit 20 is rotated by the rotating magnetic field generated by the energization of the coils 99.

The plurality of second magnets 29 move in the circumferential direction relative to the plurality of pole pieces 50 and the plurality of first magnets 19, and thus, the pole pieces 50 modulate the magnetic flux between the first yoke unit 10 and the second yoke unit 20.

The magnetic force generated by the modulated magnetic field then rotates the first yoke unit 10, and the magnetically geared motor 3A can impart the power to the rotary machine 8 via the second rotor shaft A2.

The rotary machine 8 may be coupled to the first rotor shaft A1 instead of the second rotor shaft A2.

Even in this case, the magnetically geared motor 3A can impart the power to the rotary machine 8 via the first rotor shaft A1, using the same principle as described above.

### 2. Example of Internal Structure of Magnetically Geared Electrical Machine 1

FIG. 2A and FIG. 2B are schematic diagrams illustrating an internal structure of the magnetically geared electrical machine 1 according to some embodiments of the present disclosure.

In FIG. 2A and FIG. 2B, as schematic diagrams, the circumferential direction is illustrated in a linear manner.

The plurality of first magnets 19 are constituted by magnets having different magnetic poles (N-pole magnets and S-pole magnets) alternately disposed in the circumferential direction.

Similarly, the plurality of second magnets 29 are constituted by magnets having different magnetic poles (N-pole magnets and S-pole magnets) alternately disposed in the circumferential direction.

There is the gap G1 between the pole pieces 50 and the first yoke unit 10, and there is the gap G2 between the pole pieces 50 and the second yoke unit 20.

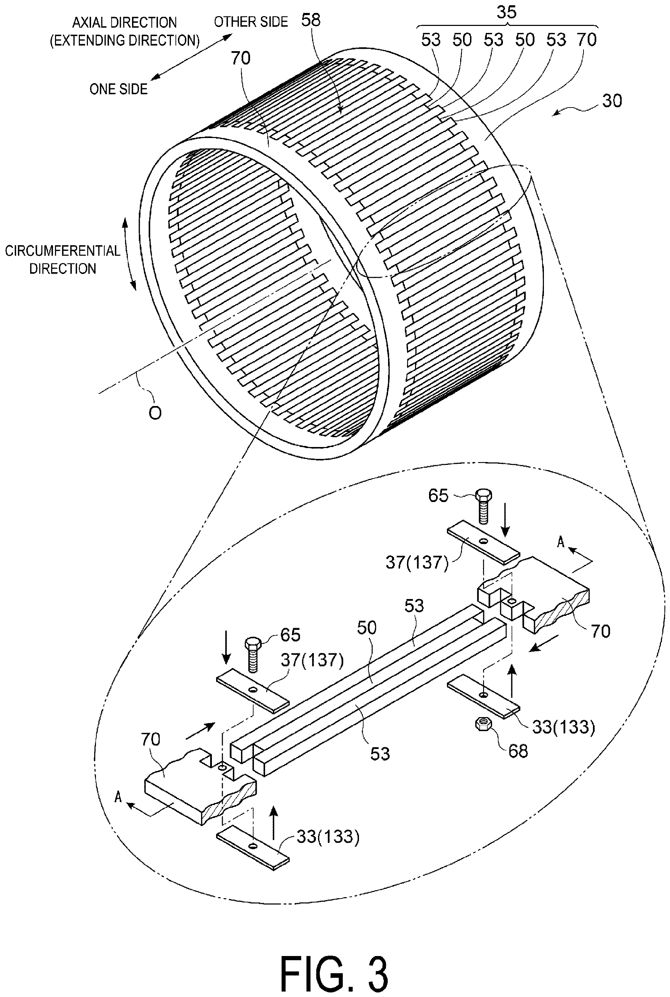

The pole piece unit 30 includes an annular unit 35 (see FIG. 3) or the like in which the plurality of pole pieces 50 and the like are provided.

However, the only components of the pole piece unit 30 illustrated in FIG. 2A and FIG. 2B are the pole pieces 50 (details of the annular unit 35 will be described later).

FIG. 2A conceptually illustrates a first internal structure as an example of the internal structure of the magnetically geared electrical machine 1, and FIG. 2B conceptually illustrates a second internal structure as another example of the internal structure of the magnetically geared electrical machine 1.

### 2-1. First Internal Structure

In the first internal structure illustrated in FIG. 2A, the first yoke unit 10 is disposed on the inner circumferential side of the pole piece unit 30, and the second yoke unit 20 is disposed on the outer circumferential side.

A more detailed configuration is as follows.

The first yoke 15 includes a first main body portion 11 that may be a core formed of a soft magnetic material.

The first main body portion 11 illustrated in FIG. 2A has an outer circumferential surface 11B that supports the plurality of first magnets 19 aligned in the circumferential direction.

The outer circumferential surface 11B is a curved surface formed over the entire length of the magnetically geared electrical machine 1 in the circumferential direction.

The second yoke 25 includes a second main body portion 21 that may be a core formed of a soft magnetic material and a plurality of second tooth portions 21T disposed at intervals in the circumferential direction.

In the example in FIG. 2A, the second main body portion 21 has an inner circumferential surface 21A facing the plurality of second magnets 29, and each of the second tooth portions 21T protrudes from the inner circumferential surface 21A toward the pole pieces 50 and supports one or more of the second magnets 29.

The second tooth portion 21T is formed of the soft magnetic material, and may be formed integrally with the second main body portion 21.

The second tooth portion 21T may be provided with the coil 99 (see FIG. 1A and FIG. 2A) as the above-described stator winding.

### 2-2. Second Internal Structure

In the second internal structure illustrated in FIG. 2B, the second yoke unit 20 is disposed on the inner circumferential side of the pole piece unit 30, and the first yoke unit 10 is disposed on the outer circumferential side.

A more detailed configuration is as follows.

The first yoke 15 includes the first main body portion 11 that may be the core formed of the soft magnetic material.

The first main body portion 11 illustrated in FIG. 2B has an inner circumferential surface 11A that supports the plurality of first magnets 19 aligned in the circumferential direction.

The inner circumferential surface 11A is a curved surface formed over the entire length of the magnetically geared electrical machine 1 in the circumferential direction.

The second yoke 25 includes the second main body portion 21 that may be the core formed of the soft magnetic material and the plurality of second tooth portions 21T disposed at intervals in the circumferential direction.

In the example in FIG. 2B, the second main body portion 21 has an outer circumferential surface 21B facing the plurality of second magnets 29, and the second tooth portion 21T protrudes from the outer circumferential surface 21B toward the pole pieces 50 and supports one or more of the second magnets 29.

Since characteristics, such as the material of the second tooth portion 21T, are the same as those of the first internal structure, a detailed description thereof will be omitted here.

### 2-3. Other Examples of Internal Structure

The magnetically geared electrical machine 1 may adopt an internal structure different from the first internal structure and the second internal structure.

For example, the first yoke 15 illustrated in FIG. 2A and FIG. 2B may have a plurality of first tooth portions protruding toward the pole pieces 50.

In this case, the first tooth portion protrudes from the inner circumferential surface 11A or the outer circumferential surface 11B of the first main body portion 11 toward the pole pieces 50, and a tip portion of the first tooth portion supports one or more of the first magnets 19.

Alternatively, the second yoke 25 illustrated in FIG. 2A and FIG. 2B need not necessarily include the second tooth portions 21T.

In this case, the inner circumferential surface 21A or the outer circumferential surface 21B of the second main body portion 21 supports the plurality of second magnets 29.

An interior permanent magnet (IPM; Interior Permanent Magnet) structure may be adopted in which, in the first yoke unit 10, the plurality of first magnets 19 are embedded in the first yoke 15.

Similarly, the second yoke 25 may adopt the interior permanent magnet structure in which the plurality of second magnets 29 are embedded in the second yoke 25.

### 3. Overview of Pole Piece Unit 30

FIG. 3 is a schematic diagram of the pole piece unit 30 according to an embodiment of the present disclosure.

The pole piece unit 30 includes an annular unit 35 extending in the circumferential direction with respect to an axis O.

The axis O is also the axis of the magnetically geared electrical machine 1.

Thus, the axial direction of the axis O (hereinafter, sometimes simply referred to as the axial direction) is the axial direction of the magnetically geared electrical machine 1, and the radial direction of the annular unit 35 is the radial direction of the magnetically geared electrical machine 1.

The pole piece unit 30 illustrated in the same drawing has a symmetrical shape in the axial direction.

Both of end portions of the annular unit 35 in the axial direction may be respectively supported by the pair of end plates 97 (see FIG. 1A and FIG. 2A) described above.

Alternatively, both of the end portions of the annular unit 35 in the axial direction may be supported by the housing 98 (see FIG. 1B and FIG. 2B).

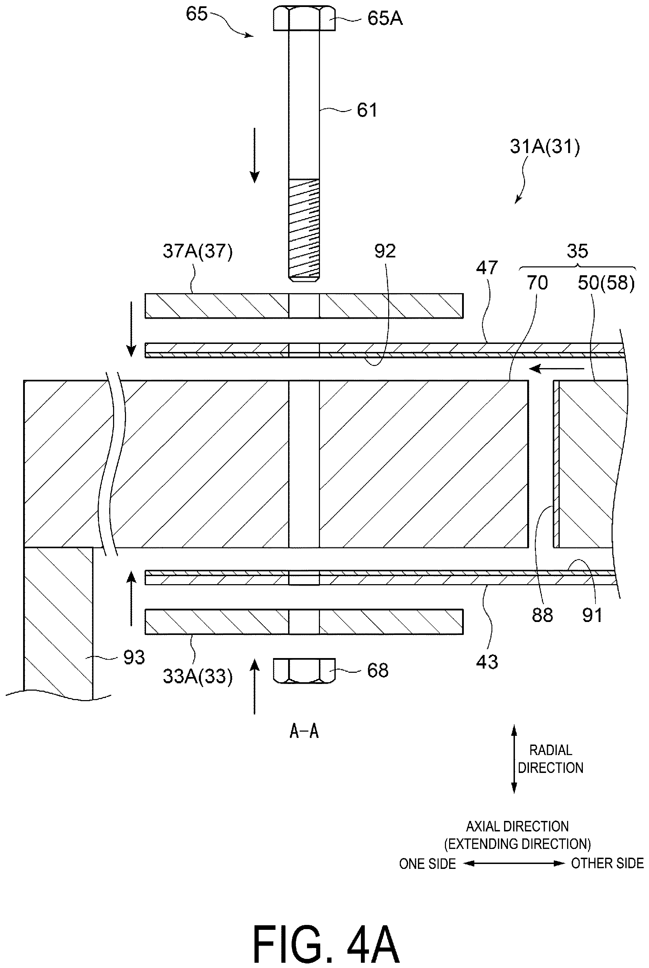

Hereinafter, for convenience of description, the pair of end plates 97 and the housing 98 are sometimes collectively referred to as a support body 93 (see FIG. 4A).

The annular unit 35 includes the plurality of pole pieces 50 aligned at intervals in the circumferential direction and a plurality of non-magnetic bodies 53 aligned at intervals in the circumferential direction.

The plurality of pole pieces 50 and the plurality of non-magnetic bodies 53 are alternately aligned in the circumferential direction, and any one of the pole pieces 50 is sandwiched between two of the non-magnetic bodies 53 in the circumferential direction.

The non-magnetic body 53 is formed of carbon fiber reinforced plastic (CFRP), for example.

In the example in the same drawing, the pole piece 50 is shorter than the non-magnetic body 53 in the axial direction.

More specifically, in the axial direction, both of end portions of the pole piece 50 are located closer to the midpoint of the annular unit 35 than both of end portions of the non-magnetic body 53.

In the axial direction, the center of each of the pole pieces 50 and the center of each of the non-magnetic bodies 53 coincide with each other.

Hereinafter, when the plurality of pole pieces 50 and the plurality of non-magnetic bodies 53 are collectively referred to, they are also referred to as an annular portion 58.

The annular unit 35 further includes a pair of coupling portions 70 respectively coupled to both of end portions of the annular portion 58 in the axial direction.

Each of the coupling portions 70 has a ring shape extending in the circumferential direction, and is supported by the support body 93 described above.

Each of the coupling portions 70 is fixed to the support body 93 by fastening means, such as a bolt.

Each of the ring-shaped coupling portions 70 may be constituted by one or a plurality of conductive members.

The conductive member is, for example, a metal such as stainless steel.

The coupling portion 70 may be constituted by one or a plurality of non-conductive members.

The non-conductive member is, for example, plastic or rubber.

In the embodiment illustrated in FIG. 3, an end surface of each of the coupling portions 70 on the annular unit 35 side has an uneven shape extending in the circumferential direction.

The plurality of non-magnetic bodies 53 are respectively fitted into a plurality of concave surfaces formed in the end surface, and each of a plurality of convex surfaces formed on the end surface comes into contact with each of the pole pieces 50 sandwiched between the two non-magnetic bodies 53.

The above-described end surface of the coupling portion 70 is bonded to the plurality of non-magnetic bodies 53 and the plurality of pole pieces 50 via an adhesive layer 88 (see FIG. 4A), for example.

Note that, in another embodiment, the pole piece 50 and the non-magnetic body 53 may have substantially the same length in the axial direction, and the end surface of the coupling portion 70 on the annular unit 35 side may be a flat surface.

In this case, for example, a structure may be adopted in which both of end portions of a support bar (not illustrated), which extends in the axial direction so as to penetrate the center portion of each of the pole pieces 50, are respectively held by the pair of coupling portions 70.

Furthermore, the pair of coupling portions 70 and the plurality of non-magnetic bodies 53 may be integrally formed.

In this embodiment, at least a part of the adhesive layer 88 is not necessary.

In the pole piece unit 30 illustrated in FIG. 3, the annular unit 35 is fastened by outer plates 37 (outer plates 137), inner plates 33 (inner plates 133), and fastening members 65.

A more detailed structure will be described below, separated as a first embodiment and a second embodiment.

Hereinafter, in order to avoid redundant description, the structure of a portion of the pole piece unit 30 having a symmetrical shape in the axial direction on one side in the axial direction with respect to the center of the unit will be described, and a description of the structure on the other side will be omitted.

### 4. Details of Pole Piece Unit 31 (30) According to First Embodiment

A pole piece unit 31, which is the pole piece unit 30 according to the first embodiment, will be described with reference to FIGS. 4A to 4C.

Hereinafter, a pole piece unit 31A (31) according to a first example and a pole piece unit 31B (31) according to a second example will be described in order.

### 4-1. Pole Piece Unit 31A (31) According to First Example

FIG. 4A is a conceptual exploded view of the pole piece unit 31A (31), and is a cross-sectional view taken along a line A-A illustrated in FIG. 3.

The pole piece unit 31A (31) includes an inner cover 43 disposed on the inner circumferential surface of the annular unit 35 and an outer cover 47 disposed on the outer circumferential surface of the annular unit 35.

Each of the inner cover 43 and the outer cover 47 is a cylinder formed of one or a plurality of members, and covers at least a part of the annular unit 35 over the entire length in the circumferential direction.

Each of the inner cover 43 and the outer cover 47 may be made of carbon fiber reinforced plastic (CFRP), for example.

The pole piece unit 31A (31) illustrated in the same drawing includes an inner adhesive layer 91 interposed between the inner cover 43 and the annular unit 35, and an outer adhesive layer 92 interposed between the outer cover 47 and the inner plate 33A.

In the present embodiment, both the outer adhesive layer 92 and the inner adhesive layer 91 are disposed so as to overlap the coupling portion 70 and the pole piece 50 in the axial direction.

In other words, both the outer adhesive layer 92 and the inner adhesive layer 91 are disposed so as to be aligned with the coupling portion 70 and the pole piece 50 in the radial direction.

Although not illustrated, both the adhesive layers are disposed so as to overlap the non-magnetic body 53 in the axial direction.

The inner adhesive layer 91 is preferably disposed so as to be aligned with a part of the coupling portion 70 in the radial direction, so as to avoid the support body 93 described above.

In the present embodiment, half or more (more preferably, two thirds or more) of the outer circumferential surface of the inner cover 43 is covered with the inner adhesive layer 91.

Even more preferably, the entire outer circumferential surface of the inner cover 43 is covered with the inner adhesive layer 91.

Half or more (more preferably, two thirds or more) of the inner circumferential surface of the outer cover 47 is covered with the outer adhesive layer 92.

Even more preferably, the entire inner circumferential surface of the outer cover 47 is covered with the outer adhesive layer 92.

The thickness (that is, the dimension in the radial direction) of each of the outer adhesive layer 92 and the inner adhesive layer 91 is one tenth or less of the dimension in the radial direction of each of the outer cover 47 and the inner cover 43.

The pole piece unit 31A (31) further includes an inner plate 33A (33) disposed on the inner circumferential surface of the inner cover 43 and an outer plate 37A (37) disposed on the outer circumferential surface of the outer cover 47.

At least a part of the inner plate 33A is disposed overlapping a part of the coupling portion 70 in the axial direction, and at least a part of the outer plate 37A is disposed to overlap the inner plate 33A in the axial direction.

In other words, at least a part of the inner plate 33A and at least a part of the outer plate 37A are aligned with the coupling portion 70 in the radial direction.

The pole piece unit 31A further includes the fastening member 65.

A shaft portion 61, which is a component of the fastening member 65, is disposed so as to penetrate the outer plate 37A, the outer cover 47, the coupling portion 70, the inner cover 43, and the inner plate 33A in the radial direction.

The shaft portion 61 according to the present example is further disposed so as to penetrate the inner adhesive layer 91 and the outer adhesive layer 92.

The fastening member 65 may be a bolt or may be a screw.

The fastening member 65 illustrated in the same drawing is a bolt, and a nut 68 is screwed onto the shaft portion 61 protruding from the inner plate 33 in the radial direction.

The nut 68 and a head portion 65A of the fastening member 65 sandwich the inner plate 33A and the outer plate 37A in the radial direction.

In the present example, the fastening member 65 and the nut 68 constitute a fastening unit, and a plurality of fastening units are disposed at intervals in the circumferential direction.

According to the above-described configuration, the inner cover 43, the annular unit 35, and the outer cover 47 are sandwiched and reinforced in the radial direction by the fastening structure constituted by the inner plate 33A, the outer plate 37A, and the fastening member 65.

This can improve the strength of the pole piece unit 31 (30).

During operation of the magnetically geared electrical machine 1, an electromagnetic force directed outward in the radial direction and an electromagnetic force directed inward in the radial direction alternately and repeatedly act on each of the plurality of pole pieces 50, and there is thus a concern that the pole piece 50 may become detached from the coupling portion 70 (or from the adhesive layer 88 bonded to the coupling portion 70).

Furthermore, in the embodiment in which the pole piece unit 30 functions as the rotor (see FIG. 1A and FIG. 1C), a centrifugal force further acts on the pole piece unit 30, and there is thus even more concern that detachment may occur.

In this regard, according to the above-described configuration, since the pole pieces 50 are more firmly sandwiched by the inner cover 43 and the outer cover 47, reinforcement of the pole pieces 50 is realized.

It is thus possible to suppress the pole piece 50 from becoming detached from the coupling portion 70 (or from the adhesive layer 88 bonded to the coupling portion 70).

This can suppress the pole piece 50 that has become detached from the coupling portion 70 from impacting the first yoke unit 10 or the second yoke unit 20, which are other components of the magnetically geared electrical machine 1.

Note that, as described above, the coupling portions 70 and the pole pieces 50 may be coupled by the support bar instead of being coupled by the adhesive layer 88.

Even in this case, an advantage is obtained that the pole piece 50 can be suppressed from becoming detached from the coupling portion 70 by improving the strength of the pole piece unit 31 (30).

The pole piece unit 30 need not necessarily have the symmetrical shape in the axial direction.

More specifically, the fastening structure including the inner plate 33A, the outer plate 37A, and the fastening member 65 may be provided only on one side of the annular unit 35 in the axial direction.

Even in this case, the above-described advantages are obtained.

The above advantages are also obtained in the embodiment in which the pole piece unit 30 functions as the stator (see FIG. 1B and FIG. 2B).

In the example in FIG. 4A, at least one of the inner plate 33A or the outer plate 37A is a conductor disposed at an interval on one side in the axial direction from the plurality of pole pieces 50.

The conductor may be a metal such as stainless steel.

In the example in the same drawing, both the inner plate 33A and the outer plate 37A are disposed at intervals on the one side from the plurality of pole pieces 50.

In other words, the inner plate 33A and the outer plate 37A are disposed so as to be aligned with only the coupling portion 70, of the coupling portion 70 or the pole pieces 50.

In the present embodiment in which the non-magnetic body 53 is longer than the pole piece 50 in the axial direction, the inner plate 33A or the outer plate 37A may be disposed so as to overlap the non-magnetic body 53 in the axial direction.

In other words, the inner plate 33A or the outer plate 37A may be disposed so as to be aligned with one end portion of the non-magnetic body 53 in the radial direction.

According to the above-described configuration, the inner plate 33A and the outer plate 37A that are the conductors are separated from the plurality of pole pieces 50 in the axial direction.

This can suppress an eddy current generated in the pole piece 50 by the operation of the magnetically geared electrical machine 1 from flowing through the conductors and can suppress an eddy current loss in the magnetically geared electrical machine 1.

One of the inner plate 33A or the outer plate 37A may be the conductor that is disposed so as to be aligned with the pole piece 50 in the radial direction.

Even in this case, the above-described advantages are obtained.

### 4-2. Pole Piece Unit 31B (31) According to Second Example

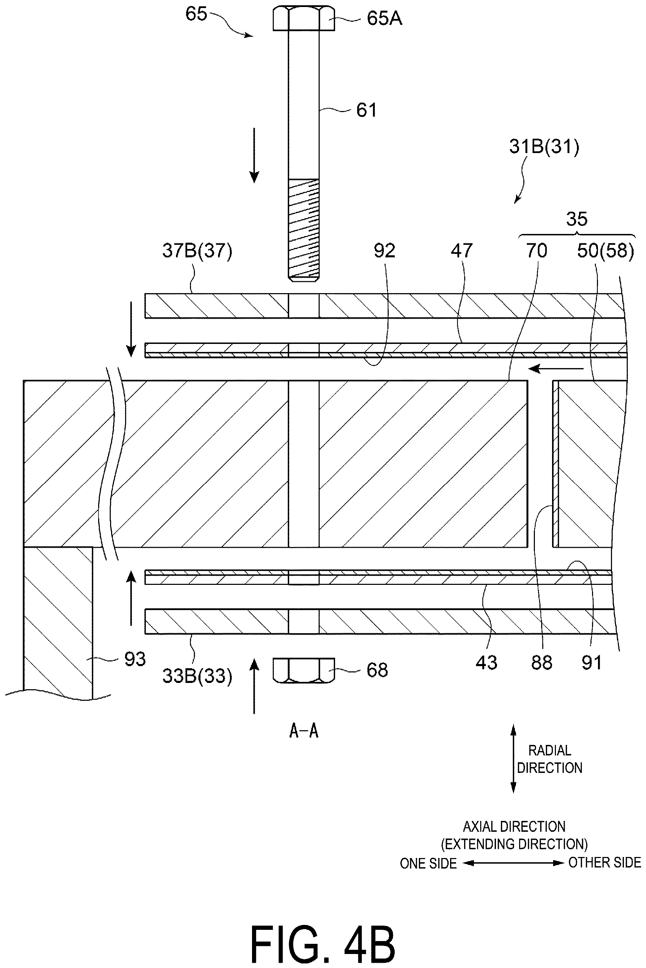

FIG. 4B is a schematic diagram illustrating a pole piece unit 31B (31) according to the second example, and is a cross-sectional view taken along the line A-A illustrated in FIG. 3.

The pole piece unit 31B includes an inner plate 33B (33) and an outer plate 37B (37) instead of the inner plate 33A and the outer plate 37A.

Otherwise, the pole piece unit 31B has the same configuration as that of the pole piece unit 31A.

At least one of the inner plate 33B or the outer plate 37B is disposed so as to overlap the coupling portion 70 and the pole piece 50 in the axial direction.

In the example in the same drawing, both the inner plate 33B and the outer plate 37B are disposed so as to overlap the coupling portion 70 and the pole piece 50 in the axial direction.

In other words, the inner plate 33B and the outer plate 37B are aligned with the coupling portion 70 and the pole piece 50 in the radial direction.

The inner plate 33B and the outer plate 37B also extend in the circumferential direction, and are also disposed so as to be aligned with the non-magnetic body 53 in the radial direction.

The inner plate 33B and the outer plate 37B are fastened by the fastening member 65 in a similar manner to the first example.

According to the above-described configuration, since the pole piece 50 is located between the inner plate 33 and the outer plate 37, a force generated by the sandwiching by the inner plate 33 and the outer plate 37 is easily transmitted to the pole piece 50.

Since a reinforcing effect of the pole piece 50 is improved, the pole piece 50 can be further suppressed from becoming detached from the coupling portion 70.

One of the inner plate 33B or the outer plate 37B may be disposed at an interval on the one side in the axial direction with respect to the pole piece 50.

Even in this case, the above-described advantages are obtained.

However, of the inner plate 33B or the outer plate 37B, it is preferable that at least the inner plate 33B is disposed so as to overlap the pole piece 50 in the axial direction.

This is because the inner plate 33B can indirectly support the pole piece 50.

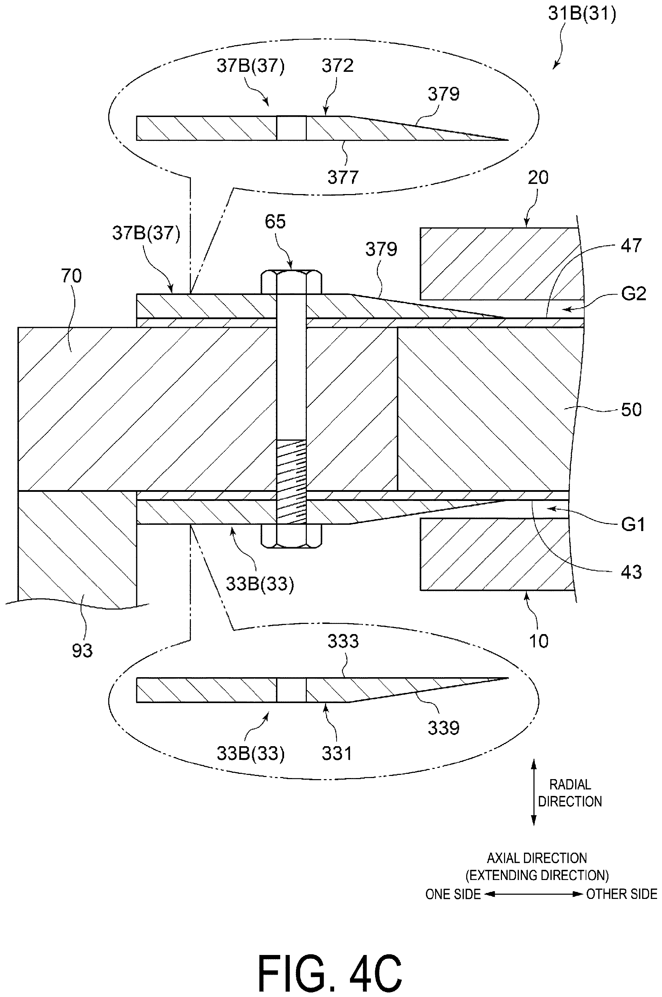

FIG. 4C is a schematic diagram in which the pole piece unit 31B (31) according to the second example is applied to the first internal structure (illustration of the inner adhesive layer 91 and the outer adhesive layer 92 is omitted).

A more detailed configuration of the pole piece unit 31B will be described with reference to the same drawing.

The inner plate 33B (33) may include an inner contact surface 333 that comes into contact with the inner cover 43 and a first opposite surface 331 on a side opposite to the inner contact surface 333.

Furthermore, the first opposite surface 331 has a first tapered surface 339 extending such that a distance between the first tapered surface 339 and the inner contact surface 333 decreases toward an opposite side (another side) opposite to the one side in the axial direction.

The first tapered surface 339 may be a flat surface as shown in the same drawing or may be a curved surface (not illustrated).

In the example in the same drawing, the first tapered surface 339 faces the first yoke unit 10 with the gap G1 therebetween.

In another embodiment, the pole piece unit 31B may be applied to the second internal structure, and the first tapered surface 339 may face the second yoke unit 20 with the gap G2 therebetween.

According to the above-described configuration, during the operation of the magnetically geared electrical machine 1, even when a force in the radial direction generated in the pole piece 50 is transmitted to the inner plate 33B, the stress is dispersed in the first tapered surface 339 of the inner plate 33B.

Since the stress concentration in the inner plate 33B is suppressed, breakage of the inner plate 33B can be suppressed.

The inner plate 33B has the first tapered surface 339, thus the gap (the gap G1 or the gap G2) between the pole piece unit 31B and the other component (the first yoke unit 10 or the second yoke unit 20) of the magnetically geared electrical machine 1 can be suppressed from becoming excessively small, and contact between the pole piece unit 31B and the other component can be suppressed.

The first tapered surface 339 may be provided in the pole piece unit 31A according to the first example.

Even in this case, the above-described advantages are obtained.

As illustrated in FIG. 4C, the outer plate 37B (37) includes an outer contact surface 377 that comes into contact with the outer cover 47 and a second opposite surface 372 on a side opposite to the outer contact surface 377.

The second opposite surface 372 has a second tapered surface 379 extending such that a distance between the second tapered surface 379 and the outer contact surface 377 decreases toward the opposite side (the other side) opposite to the one side in the axial direction.

The second tapered surface 379 may be a flat surface as shown in the same drawing or may be a curved surface (not illustrated).

In the example in the same drawing, the second tapered surface 379 faces the second yoke unit 20 with the gap G2 therebetween.

In another embodiment, the pole piece unit 31B may be applied to the second internal structure, and the second tapered surface 379 may face the first yoke unit 10 with the gap G1 therebetween.

According to the above-described configuration, during the operation of the magnetically geared electrical machine 1, even when a force directed in the radial direction generated in the pole piece 50 is transmitted to the outer plate 37B, the stress is dispersed in the second tapered surface 379 of the outer plate 37B.

Since the stress concentration in the outer plate 37B is suppressed, breakage of the outer plate 37B can be suppressed.

The outer plate 37B has the second tapered surface 379, thus the gap (the gap G2 or the gap G1) between the pole piece unit 31B and the other component (the second yoke unit 20 or the first yoke unit 10) of the magnetically geared electrical machine 1 can be suppressed from becoming excessively small, and contact between the pole piece unit 31B and the other component can be suppressed.

The second tapered surface 379 may be provided in the pole piece unit 31A according to the first example.

Even in this case, the above-described advantages are obtained.

### 5. Details of Pole Piece Unit 32 According to Second Embodiment

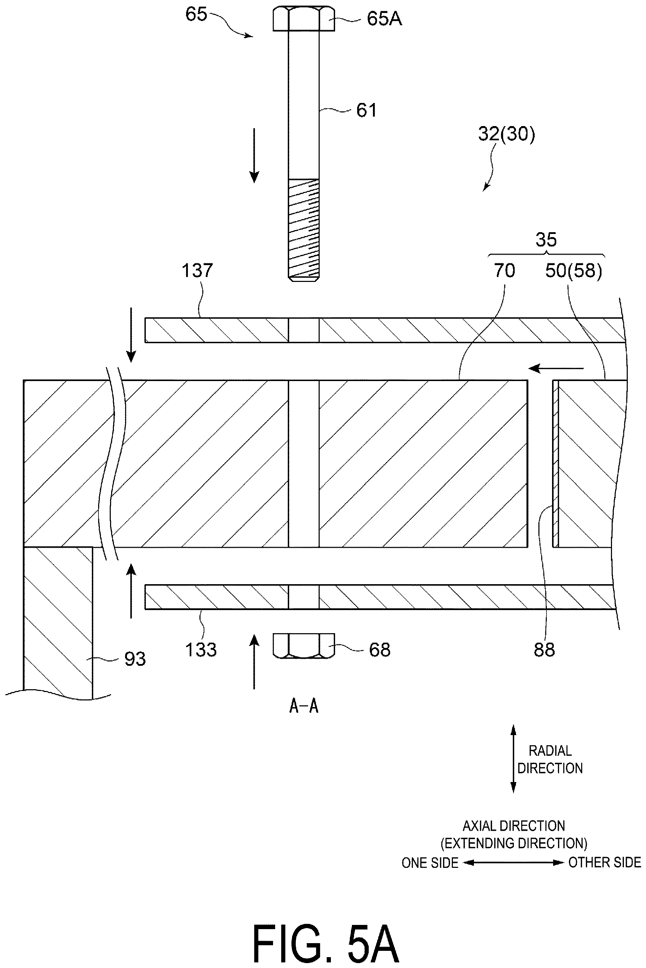

FIG. 5A is a conceptual exploded view of a pole piece unit 32 (30) according to the second embodiment, and is a cross-sectional view taken along the line A-A illustrated in FIG. 3.

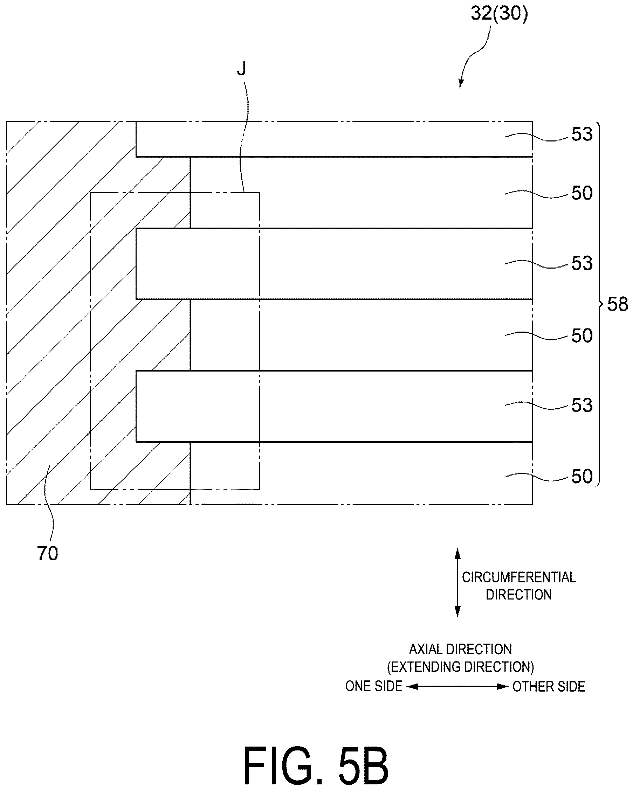

FIG. 5B is a schematic diagram illustrating the annular portion 58 of the pole piece unit 32 according to the second embodiment.

In the same drawing, the annular portion 58 is illustrated as viewed along the radial direction, and the circumferential direction is illustrated in a linear manner.

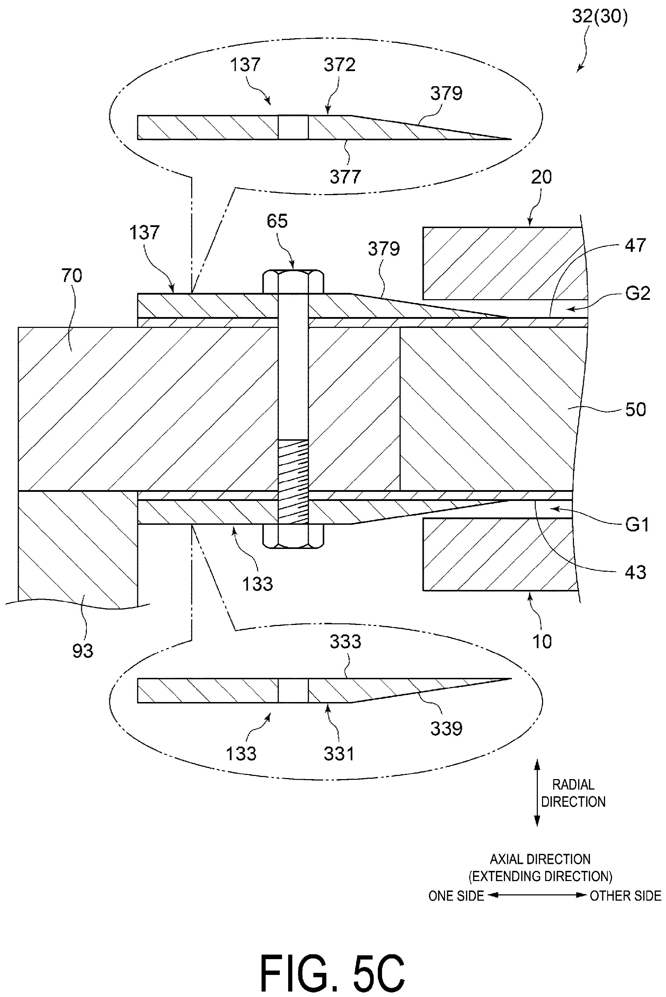

FIG. 5C is a schematic diagram of the first internal structure to which the pole piece unit according to the second embodiment is applied.

In the second embodiment illustrated in FIG. 5A, the outer cover 47, the outer adhesive layer 92, the inner cover 43, and the inner adhesive layer 91 (see FIG. 4A and FIG. 4B) are not provided.

The pole piece unit 32 according to the second embodiment includes an inner plate 133 and an outer plate 137 instead of the inner plate 33 and the outer plate 37.

The inner plate 133 is disposed on the inner circumferential surface of the annular unit 35, and is formed extending from the inner circumferential surface of the pole piece 50 and the inner circumferential surface of the non-magnetic body 53 to the inner circumferential surface of the coupling portion 70.

The pole piece unit 32 according to the present embodiment includes a plurality of the inner plates 133 aligned in the circumferential direction, and the plurality of inner plates 133 form an annular shape.

An arrangement range of one of the inner plates 133 is, for example, a region indicated by a two-dot chain line J1 illustrated in FIG. 5B.

The inner plate 133 may have a ring shape formed of a single member.

The outer plate 137 is disposed on the outer circumferential surface of the annular unit 35, and is formed extending from the outer circumferential surface of the pole piece 50 and the outer circumferential surface of the non-magnetic body 53 to the outer circumferential surface of the coupling portion 70.

The pole piece unit 32 according to the present embodiment includes a plurality of the outer plates 137 aligned in the circumferential direction, and the plurality of outer plates 137 form an annular shape.

An arrangement range of one of the outer plates 137 is, for example, the region indicated by the two-dot chain line J1 illustrated in FIG. 5B.

The outer plate 137 may have a ring shape formed of a single member.

The fastening member 65 illustrated in FIG. 5A includes the shaft portion 61, and the shaft portion 61 is disposed so as to penetrate the outer plate 137, the coupling portion 70, and the inner plate 133 in the radial direction.

In the example in the same drawing, the fastening member 65 is a bolt, and the nut 68 is screwed onto the shaft portion 61 protruding from the inner plate 133 in the radial direction.

The fastening member 65, the outer plate 137, and the inner plate 133 sandwich the coupling portion 70 and the annular portion 58 in the radial direction.

In another embodiment, the fastening member 65 may be a screw.

According to the above-described configuration, the annular unit 35 is sandwiched and reinforced in the radial direction by the fastening structure constituted by the inner plate 133, the outer plate 137, and the fastening member 65.

This can improve the strength of the pole piece unit 32 (30).

During the operation of the magnetically geared electrical machine 1, the electromagnetic force directed outward in the radial direction and the electromagnetic force directed inward in the radial direction alternately and repeatedly act on each of the plurality of pole pieces 50, and there is thus a concern that the pole piece 50 may become detached from the coupling portion 70 (or from the adhesive layer 88 bonded to the coupling portion 70).

Furthermore, in the embodiment in which the pole piece unit 30 functions as the rotor (see FIG. 1A and FIG. 1C), the centrifugal force further acts on the pole piece unit 30, and there is thus even more concern that the detachment may occur.

In this regard, according to the above-described configuration, since the pole pieces 50 are firmly sandwiched between the inner plate 133 and the outer plate 137, reinforcement of the pole pieces 50 is realized.

It is thus possible to suppress the pole piece 50 from becoming detached from the coupling portion 70 (or from the adhesive layer 88 bonded to the coupling portion 70).

This can suppress the pole piece 50 that has become detached from the coupling portion 70 from impacting the first yoke unit 10 or the second yoke unit 20, which are the other components of the magnetically geared electrical machine 1.

Note that, as described above, the coupling portions 70 and the pole pieces 50 may be coupled by the support bar instead of being coupled by the adhesive layer 88.

Even in this case, the advantage is obtained that the pole piece 50 can be suppressed from becoming detached from the coupling portion 70 by improving the strength of the pole piece unit 32.

The above advantage is also obtained in the embodiment in which the pole piece unit 30 functions as the stator (see FIG. 1B and FIG. 2B).

In the second embodiment, at least one of the inner plate 133 or the outer plate 137 is an insulator.

The insulator may be carbon fiber reinforced plastic (CFRP), ceramic, or the like.

The above-described configuration can suppress, during the operation of the magnetically geared electrical machine 1, the eddy current generated in the pole pieces 50 from flowing through at least one of the inner plate 133 or the outer plate 137 and can suppress the eddy current loss.

Either the inner plate 133 or the outer plate 137 may be a conductor.

Even in this case, since the other of the inner plate 133 or the outer plate 137 is the insulator, the above-described advantage is obtained.

As illustrated in FIG. 5C, the inner plate 133 includes components similar to those of the inner plate 33B (see FIG. 4C) according to the first embodiment.

That is, the inner plate 133 has the inner contact surface 333 and the first opposite surface 331, and the first opposite surface 331 has the first tapered surface 339.

The details of the above components are as described above.

During the operation of the magnetically geared electrical machine 1, even when a force directed in the radial direction generated in the pole piece 50 is transmitted to the inner plate 133, the stress is dispersed in the first tapered surface 339 of the inner plate 133.

Since the stress concentration in the inner plate 133 is suppressed, breakage of the inner plate 133 can be suppressed.

The inner plate 133 has the first tapered surface 339, thus the gap (the gap G1 or the gap G2) between the pole piece unit 32 and the other component (the first yoke unit 10 or the second yoke unit 20) of the magnetically geared electrical machine 1 can be suppressed from becoming excessively small, and contact between the pole piece unit 32 and the other component can be suppressed.

As illustrated in FIG. 5C, the outer plate 137 includes components similar to those of the outer plate 37B (37) according to the first embodiment.

That is, the outer plate 137 has the outer contact surface 377 and the second opposite surface 372, and the second opposite surface 372 has the second tapered surface 379.

The details of the above components are as described above.

When the magnetically geared electrical machine 1 is in operation, even if a radially directed force generated in the pole piece 50 is transmitted to the outer plate 137, the stress is dispersed in the second tapered surface 379 of the outer plate 137.

Since the stress concentration in the outer plate 137 is suppressed, breakage of the outer plate 137 can be suppressed.

The outer plate 137 has the second tapered surface 379, thus the gap (the gap G2 or the gap G1) between the pole piece unit 31B and the other component (the second yoke unit 20 or the first yoke unit 10) of the magnetically geared electrical machine 1 can be suppressed from becoming excessively small, and contact between the pole piece unit 32 and the other component can be suppressed.

### 6. Summary

The contents described in the above embodiments are understood as follows, for example.

1) A pole piece unit (30) for a magnetically geared electrical machine according to at least one embodiment of the present disclosure includes:
   an annular unit (35) extending in a circumferential direction with respect to an axis (O) and including
   a plurality of pole pieces (50) aligned at intervals in the circumferential direction,
   a plurality of non-magnetic bodies (53) aligned at intervals in the circumferential direction and aligned alternately with the plurality of pole pieces (50), and
   a coupling portion (70) coupled to an end portion of each of the pole pieces (50) and an end portion of each of the non-magnetic bodies (53) on one side of the axis (O) in an axial direction;
   an inner cover (43) disposed on an inner circumferential surface of the annular unit (35);
   an inner plate (33) disposed on an inner circumferential surface of the inner cover (43) and disposed overlapping at least the coupling portion (70) in the axial direction;
   an outer cover (47) disposed on an outer circumferential surface of the annular unit (35);
   an outer plate disposed on an outer circumferential surface of the outer cover (47) and disposed at least partially overlapping the inner plate (33) in the axial direction; and
   a fastening member (65) including a shaft portion (61) and disposed penetrating the outer plate, the outer cover (47), the coupling portion (70), the inner cover (43), and the inner plate (33) in a radial direction of the annular unit (35).

According to the configuration of 1) described above, the inner cover (43), the annular unit (35), and the outer cover (47) are sandwiched and reinforced in the radial direction by a fastening structure including the inner plate (33), the outer plate, and the fastening member (65).

This can improve the strength of the pole piece unit (30).

Thus, during operation of the magnetically geared electrical machine (1), the pole piece (50) can be suppressed from becoming detached from the coupling portion (70) due to an electromagnetic force acting on the pole piece (50).

The pole piece (50) that has become detached from the coupling portion (70) can also be suppressed from impacting other components of the magnetically geared electrical machine (1).

2) Each of some embodiments is the pole piece unit (30) according to 1) described above, and
at least one of the inner plate (33) or the outer plate is a conductor disposed at an interval on the one side in the axial direction from the plurality of pole pieces (50).

According to the configuration of 2) described above, the conductor is separated from the plurality of pole pieces (50).

This can suppress an eddy current generated in the pole piece (50) by the operation of the magnetically geared electrical machine (1) from flowing through the conductor and can suppress an eddy current loss.

3) Each of some embodiments is the pole piece unit (30) according to 1) described above, and
at least one of the inner plate (33) or the outer plate is disposed overlapping the coupling portion (70) and the pole pieces (50) in the axial direction.

According to the configuration of 3) described above, since the pole piece (50) is located between the inner plate (33) and the outer plate, a force generated by the sandwiching by the inner plate (33) and the outer plate is easily transmitted to the pole piece (50).

Since a reinforcing effect of the pole piece (50) is improved, the pole piece (50) can be further suppressed from becoming detached from the coupling portion (70).

4) Each of some embodiments, is the pole piece unit (30) according to any one of 1) to 3) described above,
the inner plate (33) includes an inner contact surface (333) contacting the inner cover (43) and a first opposite surface (331) on a side opposite to the inner contact surface (333), and
the first opposite surface (331) includes a first tapered surface (339) extending with a distance between the first tapered surface (339) and the inner contact surface (333) decreasing toward a side opposite to the one side in the axial direction.

According to the configuration of 4) described above, during the operation of the magnetically geared electrical machine (1), even when a force in the radial direction generated in the pole piece (50) is transmitted to the inner plate (33), the stress is dispersed in the first tapered surface (339) of the inner plate (33).

Since the stress concentration in the inner plate (33) is suppressed, breakage of the inner plate (33) can be suppressed.

The inner plate (33) has the first tapered surface (339), thus a gap between the pole piece unit (30) and other components of the magnetically geared electrical machine (1) can be suppressed from becoming excessively small, and contact between the pole piece unit (30) and the other components can be suppressed.

5) Each of some embodiments is the pole piece unit (30) according to any one of 1) to 4) described above,
the outer plate includes an outer contact surface (377) contacting the outer cover (47) and a second opposite surface (372) on a side opposite to the outer contact surface (377), and
the second opposite surface (372) includes a second tapered surface (379) extending with a distance between the second tapered surface (379) and the outer contact surface (377) decreasing toward a side opposite to the one side in the axial direction.

According to the configuration of 5) described above, during the operation of the magnetically geared electrical machine (1), even when a force directed in the radial direction generated in the pole piece (50) is transmitted to the outer plate, the stress is dispersed in the second tapered surface (379) of the outer plate.

Since the stress concentration in the outer plate is suppressed, breakage of the outer plate can be suppressed.

The outer plate has the second tapered surface (379), a gap between the pole piece unit (30) and other components of the magnetically geared electrical machine (1) can be suppressed from becoming excessively small, and contact between the pole piece unit (30) and the other components can be suppressed.

6) A pole piece unit (30) for a magnetically geared electrical machine according to at least one embodiment of the present disclosure includes:
an annular unit (35) extending in a circumferential direction with respect to an axis (O) and including
a plurality of pole pieces (50) aligned at intervals in the circumferential direction,
a plurality of non-magnetic bodies (53) aligned at intervals in the circumferential direction and aligned alternately with the plurality of pole pieces (50), and
a coupling portion (70) coupled to an end portion of each of the pole pieces (50) and an end portion of each of the non-magnetic bodies (53) on one side of the axis (O) in an axial direction;
an inner plate (133) disposed on an inner circumferential surface of the annular unit (35) and formed extending from an inner circumferential surface of the coupling portion (70) to an inner circumferential surface of each of the pole pieces (50) and inner circumferential surfaces of the non-magnetic bodies (53);
an outer plate (137) disposed on an outer circumferential surface of the annular unit (35) and formed extending from an outer circumferential surface of the coupling portion (70) to an outer circumferential surface of each of the pole pieces (50) and outer circumferential surfaces of the non-magnetic bodies (53); and
a fastening member (65) including a shaft portion (61) and disposed penetrating the outer plate (137), the coupling portion (70), and the inner plate (133) in a radial direction of the annular unit (35).

### [Text entered for submission]

According to the configuration of 6) described above, the annular unit (35) is sandwiched and reinforced in the radial direction by the fastening structure including the inner plate (133), the outer plate (137), and the fastening member (65).

This can improve the strength of the pole piece unit (30).

Thus, during the operation of the magnetically geared electrical machine (1), the pole piece (50) can be suppressed from becoming detached from the coupling portion (70) due to an electromagnetic force acting on the pole piece (50).

The pole piece (50) that has become detached from the coupling portion (70) can also be suppressed from impacting the other components of the magnetically geared electrical machine (1).

7) Each of some embodiments is the pole piece unit (30) according to 6) described above, and
at least one of the inner plate (133) or the outer plate (137) is an insulator.

The configuration of 7) described above can suppress, during the operation of the magnetically geared electrical machine (1), the eddy current generated in the pole piece (50) from flowing through at least one of the inner plate (133) or the outer plate (137) and can suppress the eddy current loss.

8) Each of some embodiments is the pole piece unit (30) according to 6) or 7) described above,
the inner plate (133) includes an inner contact surface (333) contacting the annular unit (35) and a first opposite surface (331) on a side opposite to the inner contact surface (333), and
"the first opposite surface (331) includes a first tapered surface (339) extending with a distance between the first tapered surface (339) and the inner contact surface (333) decreasing toward a side opposite to the one side in the axial direction."

According to the configuration of 8) described above, the same advantages as those of 4) described above can be obtained.

9) Each of some embodiments is a pole piece unit (30) according to any one of 6) to 8) described above,
the outer plate (137) includes an outer contact surface (377) contacting the annular unit (35) and a second opposite surface (372) on a side opposite to the outer contact surface (377), and
the second opposite surface (372) includes a second tapered surface (379) extending with a distance between the second tapered surface (379) and the outer contact surface (377) decreasing toward a side opposite to the one side in the axial direction.

According to the configuration of 9) described above, the same advantages as those of 5) described above can be obtained.

10) A magnetically geared electrical machine (1) according to at least one embodiment of the present disclosure includes:
the pole piece unit (30) according to any one of 1) to 9) described above;
a first yoke unit (10) including a plurality of first magnets (19) aligned in the circumferential direction on an outer side or an inner side of the annular unit (35) and a first yoke (15) supporting the plurality of first magnets (19); and
a second yoke unit (20) including a plurality of second magnets (29) aligned in the circumferential direction on the inner side or the outer side of the annular unit (35) and a second yoke (25) supporting the plurality of second magnets.

According to the configuration of 10) described above, the magnetically geared electrical machine (1) is obtained for the same reason as in the above configuration 1).

Although the embodiments of the present disclosure have been described above, the present disclosure is not limited to the embodiments described above, and includes forms obtained by modifying the embodiments described above and forms obtained by appropriately combining these forms.

In the present specification, an expression of a relative or absolute arrangement, such as "in a direction", "along a direction", "parallel", "orthogonal", "centered", "concentric" or "coaxial" shall not be construed as indicating the arrangement only in a strict literal sense, but also construed as expressing a state where the arrangement is relatively displaced by a tolerance, or by an angle or a distance to an extent with which the same function can be achieved.

For instance, an expression of a state in which features are equal, such as "same", "equal", and "uniform" shall not be construed as indicating only a state where the features are equal in a strict literal sense, but also construed as expressing a state where there is a tolerance or a difference to an extent with which the same function can be achieved.

In the present specification, an expression of a shape such as a rectangular shape or a cylindrical shape shall not be construed as expressing the shape, such as the rectangular shape or the cylindrical shape, in only a geometrically strict literal sense, but also construed as expressing a shape including uneven portions or chamfered corners within a range in which the same effect can be achieved.

Expressions such as "comprise", "include", and "constitute" are not intended to be exclusive expressions that exclude the presence of other components.

### Reference Signs List

1: Magnetically geared electrical machine
10: First yoke unit
11A: Inner circumferential surface
11B: Outer circumferential surface
15: First yoke
19: First magnet
20: Second yoke unit
21A: Inner circumferential surface
21B: Outer circumferential surface
25: Second yoke
29: Second magnet
31, 32 (30): Pole piece unit
33, 133: Inner Plate
35: Annular unit
37, 137: Outer Plate
43: Inner cover
47: Outer cover
50: Pole piece
53: Non-magnetic body
61: Shaft portion
65: Fastening member
70: Coupling portion
331: First opposite surface
333: Inner contact surface
339: First tapered surface
372: Second opposite surface
377: Outer contact surface
379: Second tapered surface
O: Axis

## Claims

1. A pole piece unit, comprising:
an annular unit extending in a circumferential direction with respect to an axis and including
a plurality of pole pieces aligned at intervals in the circumferential direction,
a plurality of non-magnetic bodies aligned at intervals in the circumferential direction and aligned alternately with the plurality of pole pieces, and
a coupling portion connected to an end portion of each of the pole pieces and an end portion of each of the non-magnetic bodies on one side of the axis in the axial direction;
an inner cover disposed on an inner circumferential surface of the annular unit;
an inner plate disposed on an inner circumferential surface of the inner cover and disposed overlapping at least the coupling portion in the axial direction;
an outer cover disposed on an outer circumferential surface of the annular unit;
an outer plate disposed on an outer circumferential surface of the outer cover and disposed at least partially overlapping the inner plate in the axial direction; and
a fastening member including a shaft portion disposed penetrating the outer plate, the outer cover, the coupling portion, the inner cover, and the inner plate in a radial direction of the annular unit.

2. The pole piece unit according to claim 1, wherein at least one of the inner plate or the outer plate is a conductor disposed at an interval on the one side in the axial direction from the plurality of pole pieces.

3. The pole piece unit according to claim 1, wherein at least one of the inner plate or the outer plate is disposed overlapping the coupling portion and the pole pieces in the axial direction.

4. The pole piece unit according to any one of claims 1 to 3, wherein
the inner plate includes an inner contact surface contacting the inner cover and a first opposite surface on a side opposite to the inner contact surface, and
the first opposite surface includes a first tapered surface extending with a distance between the first tapered surface and the inner contact surface decreasing toward a side opposite to the one side in the axial direction.

5. The pole piece unit according to any one of claims 1 to 3, wherein
the outer plate includes an outer contact surface contacting the outer cover and a second opposite surface on a side opposite to the outer contact surface, and
the second opposite surface includes a second tapered surface extending with a distance between the second tapered surface and the outer contact surface decreasing toward a side opposite to the one side in the axial direction.

6. A pole piece unit, comprising:
an annular unit extending in a circumferential direction with respect to an axis and including
a plurality of pole pieces aligned at intervals in the circumferential direction,
a plurality of non-magnetic bodies aligned at intervals in the circumferential direction and aligned alternately with the plurality of pole pieces, and
a coupling portion connected to an end portion of each of the pole pieces and an end portion of each of the non-magnetic bodies on one side of the axis in the axial direction;
an inner plate disposed on an inner circumferential surface of the annular unit and formed extending from an inner circumferential surface of the coupling portion to an inner circumferential surface of each of the pole pieces and inner circumferential surfaces of the non-magnetic bodies;
an outer plate disposed on an outer circumferential surface of the annular unit and formed extending from an outer circumferential surface of the coupling portion to an outer circumferential surface of each of the pole pieces and outer circumferential surfaces of the non-magnetic bodies; and
a fastening member including a shaft portion disposed penetrating the outer plate, the coupling portion, and the inner plate in a radial direction of the annular unit.

7. The pole piece unit according to claim 6, wherein at least one of the inner plate or the outer plate is an insulator.

8. The pole piece unit according to claim 6 or 7, wherein
the inner plate includes an inner contact surface contacting the annular unit and a first opposite surface on a side opposite to the inner contact surface, and
the first opposite surface includes a first tapered surface extending with a distance between the first tapered surface and the inner contact surface decreasing toward a side opposite to the one side in the axial direction.

9. The pole piece unit according to claim 6 or 7, wherein
the outer plate includes an outer contact surface contacting the annular unit and a second opposite surface on a side opposite to the outer contact surface, and
the second opposite surface includes a second tapered surface extending with a distance between the second tapered surface and the outer contact surface decreasing toward a side opposite to the one side in the axial direction.

10. A magnetically geared electrical machine, comprising:
the pole piece unit according to claim 1 or 6;
a first yoke unit including a plurality of first magnets aligned in the circumferential direction on an outer side or an inner side of the annular unit and a first yoke supporting the plurality of first magnets; and
a second yoke unit including a plurality of second magnets aligned in the circumferential direction on the inner side or the outer side of the annular unit and a second yoke supporting the plurality of second magnets.
